# EUROPEAN PATENT APPLICATION

(11) **EP 4 563 252 A1**
(43) Date of publication of application: **04.06.2025**
(21) Application number: 22957794.5
(22) Date of filing: 09.09.2022
(51) Int. Cl.: B08B 9/093, B08B 3/02, B08B 13/00, B01F 35/11, B05B 15/68, B05B 15/60, H01M 10/44

(54) **CLEANING APPARATUS AND STIRRING DEVICE**

(71) Applicant: CONTEMPORARY AMPEREX TECHNOLOGY (HONG KONG) LIMITED, Hong Kong (HK)
(72) Inventor: HE, Zhongbao, Ningde, Fujian 352100 (CN); QIAO, Yinyong, Ningde, Fujian 352100 (CN)
(74) Representative: Frick, Robert
(86) International application number: PCT/CN2022/118171
(87) International publication number: WO 2024/050826

(57) **Abstract**

The present application relates to a cleaning apparatus (100) and a stirring device (1000). The cleaning apparatus comprises a mounting base (110), nozzles (120) and a driving mechanism (130). The mounting base (110) is configured to be rotatable around a set direction. The nozzles (120) are arranged on the mounting base, and the driving mechanism (130) is arranged on the mounting base (110) and used for driving the nozzles (120) to swing relative to the mounting base (110). The cleaning apparatus (100) and stirring device (1000) of the present application feature good cleaning effect and high cleaning efficiency.

## Description

### TECHNICAL FIELD

The present application relates to the field of cleaning technology, and in particular to a cleaning apparatus and a stirring device.

### BACKGROUND

With the rapid development of the lithium battery industry, the iteration of power battery cells has accelerated and equipment has been replaced frequently. Slurry stirring is an important process in battery cell production. Before replacement, it is necessary to ensure that the stirring tank is thoroughly cleaned to prevent the old slurry from contaminating the new slurry.

In the related art, when cleaning a stirring tank, a method adopted is to add a solvent into the stirring tank to clean the inside of the stirring tank in conjunction with stirring with a stirring paddle. In this case, there exist problems of incomplete cleaning and low cleaning efficiency.

### SUMMARY OF THE INVENTION

In view of the above problems, the present application provides a cleaning apparatus and a stirring device, aiming to solve the problems of incomplete cleaning and low cleaning efficiency for the stirring tank.

In a first aspect, the present application provides a cleaning apparatus, comprising a mounting base, nozzles and a driving mechanism. The mounting base is configured to be rotatable around a set direction. The nozzles are arranged on the mounting base, the driving mechanism is arranged on the mounting base, and is drivably connected with the nozzles for driving the nozzles to move so that the nozzles have a spraying range in the set direction.

In the technical solution of the embodiment of the present application, when the mounting base is mounted on an apparatus to be cleaned, the mounting base can rotate around a set direction, and the nozzles arranged on the mounting base can also rotate with the mounting base, so that the nozzles can clean the surface to be cleaned of the apparatus to be cleaned within a range around the set direction. At the same time, when the mounting base rotates, the nozzle moves under the action of the driving mechanism, which can clean a surface to be cleaned within a certain height space in the set direction, so that the cleaning range of the nozzle is further expanded. The cleaning apparatus can clean the surface to be cleaned effectively and efficiently. When a stirring apparatus needs to be cleaned, the cleaning apparatus is mounted in the stirring tank of the stirring apparatus. The stirring paddle in the stirring tank and the cleaning apparatus can be combined to synchronously clean the stirring tank, which can greatly improve the cleaning efficiency and cleaning effect for the stirring tank.

In some embodiments, the nozzle includes a spray portion and a drive portion, the drive portion connects the spray portion and the driving mechanism, and the drive portion is configured to be able to drive the spray portion to swing as driven by the driving mechanism. In this case, when the mounting base rotates, the spray portion of the nozzle swings relative to the mounting base under the action of the drive portion. The spray portion can clean a surface to be cleaned within a certain height space in the set direction, so that the cleaning range of the spray portion of the nozzle is large, and the cleaning apparatus can efficiently clean the surface to be cleaned.

In some embodiments, the drive portion includes a first gear portion, the first gear portion drivably connects the spray portion and the driving mechanism, the driving mechanism is used for driving the first gear portion to rotate, and the first gear portion drives the spray portion to swing when rotating. In this case, the drive portion is simple in structure, reliable in driving and easy to implement.

In some embodiments, the driving mechanism comprises a sliding member and a power source. The sliding member is arranged on the mounting base and can slide in a direction parallel to the set direction. The sliding member is drivably connected with the nozzle and drives the nozzle to move relative to the mounting base during sliding. The power source is used for driving the sliding member to slide. In this case, the movement of the nozzle is driven by sliding of the sliding member, and the sliding of the sliding member can be realized by using the space in the set direction, so that the space occupied by the cleaning apparatus in a direction perpendicular to the set direction is small, which is helpful for the arrangement of other structures in the apparatus to be cleaned.

In some embodiments, the sliding member has a first rack portion, the nozzle includes a spray portion and a first gear portion, the first gear portion drivably connects the spray portion and the first rack portion, and during sliding of the sliding member, the first rack portion can engage with the first gear portion to drive the spray portion to swing. In this case, the drive connection between the nozzle and the sliding member is realized by using the first gear portion and the first rack portion, and the swing angle of the nozzle can be controlled by using the length of the first rack, which is not only simple in structure but also convenient to control.

In some embodiments, the sliding member further has a second rack portion, the power source has a second gear portion, and the second gear portion engages with the second rack portion. In this case, the second gear portion and the second rack portion are used to realize the drive connection between the power source and the sliding member, which has a simple structure and reliable drive.

In some embodiments, the cleaning apparatus comprises a plurality of nozzles, the plurality of nozzles are arranged around the set direction and are all drivably connected with the sliding member, and the sliding member is configured to drive all the nozzles to move relative to the mounting base when sliding. When there are a plurality of nozzles and the nozzles are arranged around the set direction, the cleaning apparatus can spray a cleaning agent to a plurality of positions of a surface to be cleaned at any time, so that the cleaning efficiency of the cleaning apparatus is better.

In some embodiments, the mounting base is configured with a mounting cavity, and the sliding member passes through the mounting cavity. In this case, the sliding member can be accommodated in the mounting cavity, which can improve the compactness of the structure of the cleaning apparatus, reduce the size of the cleaning apparatus, and reduce the mounting space occupied by the cleaning apparatus, so that the cleaning apparatus can be used in a small space and has a wider range of uses.

In some embodiments, the sliding member has a pipe-passthrough channel therein, and the cleaning apparatus further comprises a conduit. The conduit passes through the pipe-passthrough channel and extends to the interior of the nozzle, and is configured to communicate a cleaning agent supply source with the nozzle. The conduit enters the nozzle through the pipe-passthrough channel to deliver the cleaning agent to the nozzle, and the conduit is accommodated in the sliding member, which can further improve the compactness of the cleaning apparatus.

In some embodiments, the cleaning apparatus further comprises a sealing member. The sealing member is arranged in the mounting cavity and hermetically connects the sliding member and the mounting base. When the cleaning apparatus is used on an apparatus to be cleaned, the dirt cleaned by the cleaning apparatus and the polluted gas in the apparatus to be cleaned may be discharged to the outside through the passthrough channel. In this case, the arrangement of the sealing member can prevent the pollutants from being discharged to the outside through the passthrough channel and polluting the environment.

In some embodiments, the cleaning apparatus further comprises a telescopic member. The telescopic member connects the mounting base and the sliding member and is configured to be able to telescope following the sliding of the sliding member. In this case, the sliding member can be supported by connecting the sliding member and the mounting base through the telescopic member.

In some embodiments, the mounting base comprises a first base body and a second base body, and the first base body and the second base body are detachably connected in the set direction. The first base body is configured to be detachably and drivably connected with the apparatus to be cleaned, the driving mechanism is arranged on the first base body or the second base body, and the nozzle is arranged on the second base body. This way of mounting and dismounting the first base body and the second base body makes it easier to mount and dismount the mounting base on an apparatus to be cleaned.

In some embodiments, the first base body includes a main body portion and a first lug boss, the first lug boss is arranged on a side of the main body portion facing toward the second base body, the second base body has a second lug boss on the side facing toward the first base body, and the first lug boss and the second lug boss are detachably connected in the set direction. The projection of the first lug boss along the set direction exceeds the projection range of the main body portion along the set direction. The provision of the first lug boss can easily determine whether the first base body is mounted in place.

In some embodiments, the cleaning apparatus further comprises a conduit, the first end of the conduit is connected with the cleaning agent supply source, and its second end extends into the interior of the nozzle. In this case, the conduit enables the cleaning agent supply source to supply the cleaning agent to the nozzle, and the position of the cleaning agent supply source can be flexibly arranged.

In a second aspect, the present application provides a stirring device, comprising a stirring apparatus and the above-mentioned cleaning apparatus, the stirring apparatus comprises a stirring tank and a stirring member, the stirring tank encloses a mixing space, the stirring member comprises a mounting portion connected with a stirring portion, the mounting portion is mounted on the stirring tank, and the stirring portion is located in the mixing space. The mounting base of the cleaning apparatus is fitted to a mounting assembly, and the nozzle is located in the mixing space.

In the technical solution of the embodiment of the present application, when the mounting portion is fitted to the mounting assembly, the mounting portion rotates and drives the nozzle to rotate. At the same time, the nozzle moves under the action of its driving mechanism and cleans the stirring tank. At the same time, the stirring apparatus can be turned on to make the stirring member rotate. When the stirring member rotates, the solvent in the stirring tank can be stirred, and the solvent can clean the inner wall of the stirring tank. In this way, the stirring tank can be double-cleaned by the stirring member and the cleaning apparatus, and the cleaning effect and cleaning efficiency for the stirring tank are good.

In some embodiments, a mounting assembly is provided in the stirring tank, the mounting assembly is located outside the mixing space, the mounting portion is mounted on the mounting assembly, and the mounting base is detachably fitted to the mounting assembly. The mounting assembly is configured to drive the mounting base and the stirring member to rotate. In this way, when the stirring device needs to be cleaned, the mounting base and the stirring member can be driven to rotate through the mounting assembly, so that the stirring member and the nozzle can clean the stirring tank.

In some embodiments, the mounting assembly is configured to drive the mounting base and the stirring member to rotate synchronously. In this way, the stirring member and the nozzle can be driven by the mounting assembly to clean the stirring tank synchronously, and the cleaning efficiency is greatly improved.

In some embodiments, the mixing space includes a first space and a second space that are adjacently arranged in the set direction, the stirring portion is at least partially located in the first space, and the nozzle is located in the second space. The first space is located below the second space in the gravity direction. In this case, the inner wall of the stirring tank defining the second space is cleaned by using the nozzle located in the second space, so that the stirring tank can be cleaned thoroughly, and the cleaning effect for the stirring tank is good.

In some embodiments, the stirring apparatus further comprises a gas-permeable member, and the stirring tank has an exhaust port communicating with the second space. The gas-permeable member is hermetically fitted to the exhaust port and is configured to only allow gas to flow. In this case, the gas existing in the stirring tank can also be discharged from the gas-permeable member, which can avoid excessive pressure in the stirring tank and facilitate the spraying of the cleaning agent.

In some embodiments, the cleaning apparatus further comprises a cleaning agent supply source, the cleaning agent supply source communicates with the nozzle and is used to supply a cleaning agent to the nozzle, and the cleaning agent includes a dry ice cleaning agent. By using dry ice as a cleaning agent, the cleaning effect of the cleaning apparatus is better. At the same time, the vaporized dry ice can be discharged from the gas-permeable member, which has little effect on the pressure inside the stirring tank.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
Fig. 1 is a schematic structural diagram of a cleaning apparatus in some embodiments of the present application;
Fig. 2 is a schematic structural diagram of a cleaning apparatus in other embodiments of the present application;
Fig. 3 is a schematic structural diagram of a cleaning apparatus in other embodiments of the present application;
Fig. 4 is a schematic structural diagram of a stirring device in some embodiments of the present application;
Fig. 5 is a schematic structural diagram of a stirring device in other embodiments of the present application;
Fig. 6 is a schematic structural diagram of a stirring apparatus in some embodiments of the present application.

Reference numerals in Detailed Description are as follows:
1000, stirring device; 100, cleaning apparatus; 110, mounting base; K, mounting cavity; 111, first base body; 111a, main body; 111b, first lug boss; 112, second base body; 112a, second lug boss; 120, nozzle; 121, drive portion; 121a, first gear portion; 122, spray portion; 130, driving mechanism; 131, sliding member; 131a, first rack portion; 131b, second rack portion; 131c, pipe-passthrough channel; 132, power source; 132a, second gear portion ; 140, cleaning agent supply source; 150, pump; 160, conduit; 170, sealing member; 180, telescopic member; 190, bearing member; 200, stirring apparatus; 210, stirring tank; 211, mixing space; 211a, first space; 211b, second space; 212, mounting assembly; 212a, main drive shaft; 212b, drive tooth; 213, exhaust port; 214, sewage outlet; 220, stirring member; 221, mounting portion; 222, stirring portion; 230, gas-permeable member; 2000, solvent.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the descriptions of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting," "connection," "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

Stirring device is a device used to fully mix powder and solvent to obtain a homogeneous slurry. It is widely used in various industries. In the field of battery preparation, the stirring device is mainly used to produce electrode slurry for preparing battery electrode plates. With the rapid development of the battery industry, the iteration of battery cells has accelerated and equipment has been replaced frequently. Slurry stirring is an important process in electrode plate production. Before replacement, it is necessary to ensure that the stirring tank is thoroughly cleaned to prevent the old slurry from contaminating the new slurry.

The inventors have noticed that in the related art, when cleaning a stirring tank, the method usually adopted is to add a solvent into the stirring tank in conjunction with stirring with a stirring paddle, the dirt attached to the inner wall of the stirring tank is dissolved by the stirred solvent to achieve the cleaning of the stirring tank. In this case, there exist problems of incomplete cleaning and low cleaning efficiency.

Based on the above considerations, in order to solve the problems of incomplete cleaning and low cleaning efficiency for stirring tanks in the prior art, the inventors conducted in-depth research and designed a cleaning apparatus and a stirring device, comprising a mounting base, a nozzle and a driving mechanism, and the mounting base being configured to be rotatable around the set direction. The nozzle is arranged on the mounting base, and the driving mechanism is arranged on the mounting base and is drivably connected with the nozzle, so as to drive the nozzle to move relative to the mounting base. When the stirring tank needs to be cleaned, the mounting base of the cleaning device is mounted in the stirring tank, and the cleaning liquid is sprayed through the nozzle to clean the inside of the stirring tank with the assistance of the stirring paddle in the stirring tank, which greatly improves the cleaning efficiency and cleaning effect for the stirring tank. Moreover, the cleaning apparatus is detachably mounted through its mounting base, and can be mounted on a variety of apparatuses to be cleaned, rather than being limited to one type of apparatus to be cleaned. The versatility and utilization rate of the cleaning apparatus are greatly improved.

The cleaning apparatus disclosed in the embodiment of the present application can be used, but is not limited to, for cleaning the stirring tank of the stirring device, and can also be used in any other place where a tank or other types of containers need to be cleaned. In the embodiments of the present application, for the convenience of description, the cleaning of a stirring tank by a cleaning apparatus is taken as an example to derive and illustrate the beneficial effects, but it does not limit the application scenarios of the cleaning apparatus. That is to say, the apparatus to be cleaned mentioned in the embodiments of the present application may be, but is not limited to, a stirring apparatus comprising a stirring tank, and may also be other apparatuses comprising a container for holding materials.

The stirring device disclosed in the embodiment of the present application comprises a stirring apparatus and a cleaning apparatus. The stirring apparatus mainly comprises a stirring tank and a stirring member, and the stirring member stirs the material in the stirring tank. Regarding the structures of the stirring apparatus and the cleaning apparatus, please refer to the description in the following embodiments and it will not be repeated here.

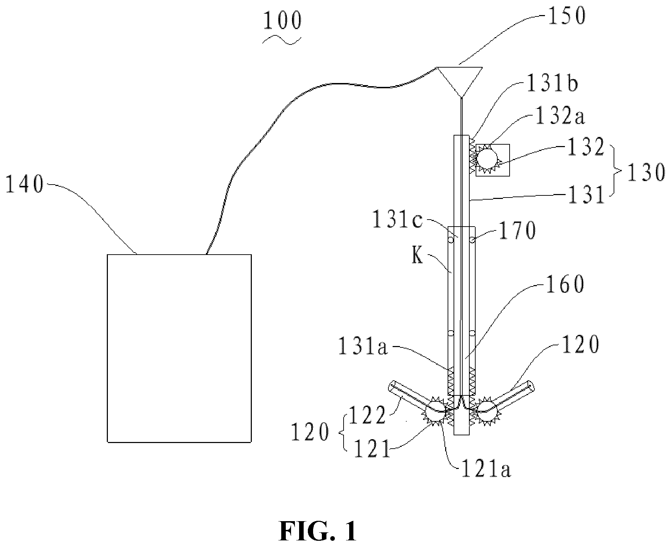

Figs. 1, 2 and 3 each show a schematic structural diagram of a cleaning apparatus 100 in different embodiments of the present application.

According to some embodiments of the present application, referring to Figs. 1, 2 and 3, a cleaning apparatus 100 provided in the present application comprises a mounting base 110, a nozzle 120 and a driving mechanism 130. The mounting base 110 is configured to be rotatable around a set direction. The nozzle 120 is arranged on the mounting base 110, the driving mechanism 130 is arranged on the mounting base 110, and is drivably connected with the nozzle 120 for driving the nozzle 120 to move so that the nozzle 120 has a spraying range in the set direction.

The mounting base 110 is the base portion of the cleaning apparatus 100, and is used to mount the nozzle 120 and the driving mechanism 130. Also, it is used to be fitted to an apparatus to be cleaned to achieve the mounting of the cleaning apparatus 100. The mounting base 110 can be in the form of a mounting plate, a mounting tube, a mounting block, etc. Its structural form can be flexibly set, and its specific structure is not limited.

When the mounting base 110 is mounted on an apparatus to be cleaned, the mounting base 110 can rotate in the set direction. The mounting base 110 can rotate as driven by the apparatus to be cleaned. When the apparatus to be cleaned drives the mounting base 110 to rotate, the mounting base 110 can be drivably connected with the drive shaft in the apparatus to be cleaned when it is fitted to the apparatus to be cleaned. The drive shaft drives the mounting base 110 to rotate under the action of power inside the apparatus to be cleaned. Exemplarily, the apparatus to be cleaned has a mounting hole and a motor, the mounting base 110 is rotatably fitted to the mounting hole and is drivably connected with the output end of the motor, and when the motor is working, it drives the mounting base 110 to rotate in the mounting hole. In another example, the apparatus to be cleaned has a rotating clamping jaw, the mounting base 110 can be fitted to the rotating clamping jaw, and the rotating clamping jaw can drive the mounting base 110 to rotate when rotating. Of course, the mounting base 110 may also rotate as driven by the driving mechanism included in the cleaning apparatus 100, and the specific solution is not limited. The mounting base 110 can, but is not limited to, rotate around a set direction.

The nozzle 120 is used to spray a cleaning liquid. The cleaning liquid has certain kinetic energy when it is sprayed out from the nozzle 120. When it acts on a surface to be cleaned, it can effectively remove dirt on the surface to be cleaned. The cleaning liquid can be dry ice, water, solvent, etc., which is not specifically limited. It can be understood that the nozzle 120 can communicate with a cleaning liquid supply source. Optionally, the nozzle 120 is directly connected with a cleaning liquid supply source via a communicating pipe. Further optionally, the mounting base 110 has a flow channel therein, the flow channel can be connected with the cleaning liquid supply source through a pipeline, and the nozzle 120 communicates with the flow channel. The specific solutions for the nozzle 120 to spray the cleaning liquid can be flexibly set and is not limited here.

The spraying direction of the nozzle 120 is the direction of its spray spout. The number of the nozzles 120 may be one or more. When the nozzle 120 comprises a plurality of nozzles 120, the plurality of nozzles 120 simultaneously spray the cleaning liquid to different parts of the inner wall to be cleaned, thereby achieving high cleaning efficiency. The plurality of nozzles 120 may be arranged sequentially in a direction parallel to the set direction, or may be arranged sequentially in a direction around the set direction, or may be arranged in other ways, which is not specifically limited.

The nozzle 120 has a spray range in the set direction, which means that the nozzle 120 can spray and clean the inner wall of the apparatus to be cleaned within a certain range in the set direction. It can be understood that in order to allow the nozzle 120 to have a spray range in the set direction, the moving direction of the nozzle 120 is different from the rotating direction of the mounting base 110.

The nozzle 120 moves relative to the mounting base, which means that the nozzle 120 can be displaced relative to the mounting base 110. The displacement includes a change in the included angle of the spraying direction of the nozzle 120 relative to the mounting base 110 (parallel to the center line of the set axial direction), and a change in the position of the nozzle 120 relative to the mounting base 110. The position change includes, but is not limited to, a position change in the set direction, and also includes a position change in a direction having an acute angle with the set direction, so that the nozzle 120 has a spray range in the set direction. The included angle change may be that when the nozzle 120 swings relative to a certain rotation center line, the included angle relative to the mounting base 110 (parallel to the center line of the set direction) is changed, so that the nozzle 120 has a spray range in the set direction. When the nozzle moves relative to the mounting base, the nozzle can change its own spraying position in the set axial direction, thereby expanding the cleaning range.

The specific structure for realizing the movement of the nozzle 120 relative to the mounting base 110 is not specifically limited in the embodiments of the present application.

In an example, the mounting base 110 has a mounting shaft, the nozzle 120 is fixedly mounted on the mounting shaft, the mounting shaft is drivably connected with the driving mechanism 130 and can rotate under the action of the driving mechanism 130, and the direction of the mounting shaft coincides with the rotation center line of the nozzle 120. The mounting shaft has two extreme rotation angles, and the mounting base 110 is also provided with two position-limiting members arranged corresponding to the positions of the two extreme rotation angles. Under the restriction of the two position-limiting members, the mounting shaft can only rotate between the two extreme rotation angles, thereby achieving changes in the included angle between the nozzle 120 and the mounting base 110.

There are many ways to configure the driving mechanism 130, which is not specifically limited in the embodiments of the present application. For example, the driving mechanism 130 includes a driving motor. When the driving motor rotates at a set angle, it drives the nozzle 120 to rotate around its rotation center line to change the included angle relative to the mounting base 110. For another example, the driving mechanism 130 includes a push rod and a slider. When the slider slides in a direction parallel to the set direction, the push rod drives the nozzle 120 to translate along the set direction to change its position relative to the mounting base 110.

For the above-mentioned cleaning apparatus 100, when the mounting base 110 is mounted on an apparatus to be cleaned 100, the mounting base 110 can rotate around its own set direction, and the nozzle 120 arranged on the mounting base 110 can also rotate with the mounting base 110, so that the nozzles 120 can clean the surface to be cleaned of the apparatus to be cleaned 100 within a range around the set direction. At the same time, when the mounting base 110 rotates, the nozzle 120 moves relative to the mounting base 110 under the action of the driving mechanism 130, and the nozzle 120, as it moves, can clean a surface to be cleaned within a certain height space in the set direction, so that the cleaning range of the nozzle 120 is further expanded. The cleaning apparatus 100 can clean a surface to be cleaned effectively and efficiently.

When the stirring apparatus 200 needs to be cleaned, the cleaning apparatus 100 is mounted in the stirring tank 210 of the stirring apparatus 200. The stirring paddle in the stirring tank 210 and the cleaning apparatus 100 can be combined to synchronously clean the stirring tank 210, which can greatly improve the cleaning efficiency and cleaning effect for the stirring tank 210.

In some embodiments, the nozzle 120 includes a spray portion 122 and a drive portion 121, and the drive portion 121 drivably connects the spray portion 122 and the driving mechanism 130. The drive portion 121 is configured to be able to drive the spray portion 122 to swing as driven by the driving mechanism 130.

The spray portion 122 is a component used in the nozzle to spray the cleaning liquid, and may be, but is not limited to, a spray spout, a spray pipe, etc. The spraying direction of the nozzle 120 is the spraying direction of the spray portion 122. When the spray portion 122 swings relative to the mounting base 110, the included angle between the spraying direction of the spray portion 122 and the mounting base 110 (parallel to the center line of the set axial direction) changes, so that the spray portion 122 is displaced relative to the mounting base 110.

The spray portion 122 swings around a rotation center line, and the rotation center line intersects with the set direction space. The rotation center line intersects with the set direction space, which means that the two are not coplanar, and in a plane parallel to the set direction and the swing axis, the orthographic projection of the set direction and the orthographic projection of the swing axis intersect (may be perpendicular or not perpendicular). In practical applications, the set direction may be a vertical line, and the swing axis may be the rotation center line.

The drive portion 121 can convert the power of the driving mechanism 130 into a torque force for driving the spray portion 122 to swing. There are many ways to construct the drive portion 121, as long as it can drive the spray portion 122 to swing. The present application does not limit the specific structure of the drive portion 121.

In actual operation, when the mounting base 110 rotates, the spray portion 122 of the nozzle 120 swings relative to the mounting base 110 under the action of the drive portion 121. The spray portion 122 can clean a surface to be cleaned within a certain height space in the set direction, so that the cleaning range of the spray portion 122 of the nozzle is large, and the cleaning apparatus 100 can efficiently clean the surface to be cleaned.

In some embodiments, the drive portion 121 includes a first gear portion 121a, the first gear portion 121a drivably connects the spray portion 122 and the driving mechanism, the driving mechanism is used for driving the first gear portion 121a to rotate, and the first gear portion 121a drives the spray portion 122 to swing when rotating.

It can be understood that the center line of the first gear portion 121a is the rotation center line of the spray portion 122. When the driving mechanism drives the first gear portion 121a to rotate, the first gear portion 121a drives the spray portion 122 to swing around the rotation center line, so that the spray portion 122 is displaced relative to the mounting base.

In this case, the drive portion 121 is simple in structure, reliable in driving and easy to implement.

Of course, in other embodiments, in order to achieve the swing of the spray portion 122, the mounting shaft as described above can also be provided, the driving mechanism 130 can be a motor, the motor drives the mounting shaft to rotate, and the spray portion 122 is fixed on the mounting shaft and rotates with the mounting shaft to achieve swing.

In some embodiments, the cleaning apparatus 100 further comprises a cleaning agent supply source 140, the cleaning agent supply source 140 communicates with the nozzle 120 and is used to supply a cleaning agent to the nozzle. The cleaning agent supply source 140 may be a cleaning agent tank, a cleaning agent box, or other members capable of containing the cleaning agent. The cleaning agent can be water, solvent, etc. The cleaning agent supply source 140 can continuously supply the cleaning agent to the nozzle 120, which ensures the cleaning effect of the cleaning apparatus 100.

In some embodiments, the cleaning apparatus 100 further comprises a pump 150, and the cleaning agent supply source 140 communicates with the nozzle 120 via the pump 150.

The pump 150 is a machine for conveying a fluid or pressurizing a fluid. It transfers the mechanical energy of the prime mover or other external energy to the fluid, increasing the fluid energy. The pump 150 can be a positive displacement pump, a dynamic pump, or other types of pumps. As a common component in the art, the specific structure of the pump is not limited here. Under the action of the pump 150, the cleaning liquid can smoothly flow from the cleaning liquid source to the nozzle 120 without interruption of flow.

In some embodiments, referring to Figs. 1, 2 and 3, the cleaning apparatus 100 further comprises a conduit 160, the first end of the conduit 160 is connected with the cleaning agent supply source 140, and its second end extends into the interior of the nozzle 120.

The conduit 160 may be a hard pipe, a soft pipe, or a corrugated pipe, which is not specifically limited. The mounting cavity K may be a cavity having only an inlet and an outlet, or may be an open channel, as long as the conduit 160 can be arranged therein, which is not specifically limited.

In this case, the conduit 160 enables the cleaning agent supply source 140 to supply the cleaning agent to the nozzle 120, and the position of the cleaning agent supply source 140 can be flexibly arranged. It should be noted that the conduit 160 can extend into the nozzle 120 and swing with the nozzle 120, or extend into the nozzle 120 but not swing with the nozzle 120. As long as the cleaning agent can be sprayed, the conduit 160 can swing or not, which is not limited here.

In some embodiments, the mounting base 110 is configured with a mounting cavity K, the conduit 160 passes through the mounting cavity K and extends to the inside of the nozzle 120, and the conduit 160 is used to communicate the cleaning agent supply source 140 with the nozzle 120.

When there are a plurality of nozzles 120, a plurality of conduits 160 can be arranged accordingly, or the conduit 160 can be a manifold structure with a communicating main pipe and a plurality of branch pipes, the main pipe is arranged in the mounting cavity K, and the branch pipes extend to the nozzles 120 accordingly.

The conduit 160 enters the nozzle 120 through the mounting cavity K to transport the cleaning agent to the nozzle 120. The conduit 160 is less exposed to the outside, which can avoid the problem that the cleaning apparatus 100 cannot smoothly spray the cleaning agent due to damage to the conduit 160.

In some embodiments, referring to Figs. 1, 2 and 3, the driving mechanism 130 comprises a sliding member 131 and a power source 132, the sliding member 131 is arranged on the mounting base 110, and can slide in a direction parallel to the set direction, the sliding member 131 is drivably connected with the nozzle 120, and drives the nozzle 120 to move relative to the mounting base 110 during sliding.

The sliding member 131 may be a sliding rod arranged inside the mounting base 110, or a sliding cylinder sleeved outside the mounting base 110, which is not specifically limited. The power source 132 is used to provide power for the sliding member 131 to slide relative to the mounting base 110, and can be but is not limited to a telescopic motor, an electric motor, a drive belt assembly, etc. When there are a plurality of nozzles 120, all the nozzles 120 can be drivably connected with the same sliding member 131, or can be drivably connected with a plurality of sliding members in one-to-one correspondence, which is not specifically limited.

When the mounting base 110 is mounted on the apparatus to be cleaned 100 and is controlled to rotate around the set direction, the sliding member 131 is driven by the power source 132 to slide back and forth in parallel with the set direction and drive the nozzle 120 to move relative to the mounting base 110 to achieve effective cleaning of a surface to be cleaned.

In this case, the rotation of the nozzle 120 is driven by sliding of the sliding member 131, and the sliding of the sliding member 131 can be realized by using the space in the set direction, so that the space occupied by the cleaning apparatus 100 in a direction perpendicular to the set direction is small, which is helpful for the arrangement of other structures in the apparatus to be cleaned 100.

In some embodiments, referring to Figs. 1, 2 and 3, the sliding member 131 has a first rack portion 131a, the nozzle 120 has a spray portion 122 and a first gear portion 121a, and the first gear portion 121a drivably connects the spray portion 122 and the first rack portion. during sliding of the sliding member 131, the first rack portion 131a can engage with the first gear portion 121a and drive the spray portion 122 to swing.

In this case, the sliding member 131 is drivably connected with the nozzle 120 via the engaged first rack portion 131a and first gear portion 121a. For details about the spray portion 122, please refer to the above description. It can be understood that the first rack portion 131a extends in a direction parallel to the set direction, and the center line of the first gear portion 121a coincides with the rotation center line of the connected spray portion 122. When the sliding member 131 slides in a direction parallel to the set direction, the first rack portion 131a moves and drives the first gear portion 121a engaging therewith to rotate, thereby achieving the swing of the nozzle 120.

It can be understood that the rotation angle of the first gear portion 121a can be controlled by the length of the first rack portion 131a, thereby controlling the swing angle of the nozzle 120.

When there are a plurality of nozzles 120 and the plurality of nozzles 120 are arranged around the set direction, the first rack portion 131a extends in a direction parallel to the set direction and can be annular around the set direction, or can include a plurality of rack sections arranged around the set direction, and the rack sections engage with the first gear portions 121a of the nozzles 120, respectively.

In this case, the drive connection between the nozzle 120 and the sliding member 131 is realized by using the first gear portion 121a and the first rack portion 131a, and the swing angle of the nozzle 120 can be controlled by using the length of the first rack portion 131a, which is not only simple in structure but also convenient to control.

In some embodiments, referring to Figs. 1, 2 and 3, the sliding member 131 also has a second rack portion 131b, the power source 132 has a second gear portion 132a, the second gear portion 132a engages with the second rack portion 131b, and the sliding member 131 and the power source 132 are drivably connected via the engaged second rack portion 131b and second gear portion 132a.

It can be understood that the second rack portion 131b extends in a direction parallel to the set direction. When the second gear portion 132a rotates, the second rack portion 131b engaging therewith is driven to move, thereby enabling the sliding member 131 to slide on the mounting base 110.

It can be understood that the movement length of the first rack portion 131a can be controlled by the length of the tooth profile of the second gear portion 132a around its rotation center, thereby controlling the sliding length of the sliding member 131 and thus controlling the swing angle of the nozzle 120.

In this case, the second gear portion 132a and the second rack portion 131b are used to realize the drive connection between the power source 132 and the sliding member 131, which has a simple structure and reliable drive.

In some embodiments, referring to Figs. 1, 2 and 3, the cleaning apparatus 100 comprises a plurality of nozzles 120, the plurality of nozzles 120 are arranged around the set direction and are all drivably connected with the sliding member 131, and the sliding member 131 is configured to drive all the nozzles 120 to move relative to the mounting base 110 when sliding.

When there are a plurality of nozzles 120 and the nozzles are arranged around the set direction, the cleaning apparatus 100 can spray a cleaning agent to a plurality of positions of a surface to be cleaned at any time, so that the cleaning efficiency of the cleaning apparatus 100 is better.

In some embodiments, referring to Figs. 1, 2 and 3, the mounting base 110 is configured with a mounting cavity K, and the sliding member 131 passes through the mounting cavity K.

The mounting cavity K may be a cavity having only an inlet and an outlet, or may be an open channel, as long as the sliding member 131 can be arranged therein, which is not specifically limited. The sliding member 131 slides along the mounting cavity K when sliding.

In this case, the sliding member 131 can be accommodated in the mounting cavity K, which can improve the compactness of the structure of the cleaning apparatus 100, reduce the size of the cleaning apparatus 100, and reduce the mounting space occupied by the cleaning apparatus 100, so that the cleaning apparatus 100 can be used in a small space and has a wider range of uses.

In some embodiments, referring to Figs. 1, 2 and 3, the sliding member 131 has a pipe-passthrough channel 131c therein, and the cleaning apparatus 100 further comprises a conduit 160. The conduit 160 passes through the pipe-passthrough channel 131c and extends to the interior of the nozzle 120, and is configured to communicate a cleaning agent supply source 140 with the nozzle 120.

The conduit 160 may be a hard pipe, a soft pipe, or a corrugated pipe, which is not specifically limited. When there are a plurality of nozzles 120, a plurality of conduits 160 can be arranged accordingly, or the conduit 160 can be a manifold structure with a communicating main pipe and a plurality of branch pipes, the main pipe is arranged in the mounting cavity K, and the branch pipes extend to the nozzles 120 accordingly. It should be noted that the conduit 160 can extend into the nozzle 120 and swing with the nozzle 120, or extend into the nozzle 120 but not swing with the nozzle 120. As long as the cleaning agent can be sprayed, the conduit 160 can swing or not, which is not limited here.

The pipe-passthrough channel 131c can be set to run through along the set direction, the conduit 160 enters the nozzle 120 through the pipe-passthrough channel 131c to transport the cleaning agent to the nozzle 120, and the conduit 160 is accommodated in the sliding member 131, which can further improve the compactness of the cleaning apparatus 100.

In some embodiments, the cleaning apparatus 100 further comprises a sealing member 170. The sealing member 170 is arranged in the mounting cavity K and hermetically connects the sliding member 131 and the mounting base 110.

The sealing member 170 may be a seal ring, specifically, an O-ring, a square seal ring, or a seal ring of other shapes, as long as it can hermetically connect the sliding member 131 and the mounting base 110 , and its specific structure is not limited here.

When the cleaning apparatus 100 is used on an apparatus to be cleaned 100, the dirt cleaned by the cleaning apparatus 100 and the polluted gas in the apparatus to be cleaned 100 may be discharged to the outside through the passthrough channel. In this case, the arrangement of the sealing member 170 can prevent the pollutants from being discharged to the outside through the passthrough channel and polluting the environment.

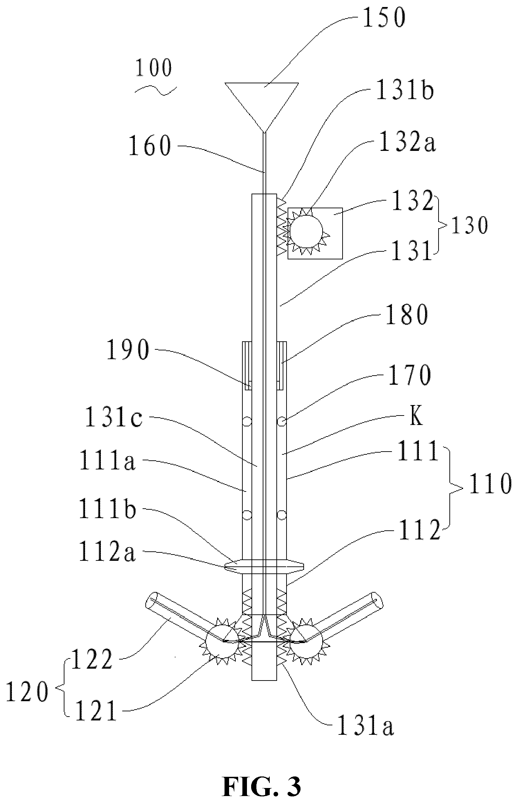

In some embodiments, referring to Fig. 3, the cleaning apparatus 100 further comprises a telescopic member 180. The telescopic member 180 connects the mounting base 110 and the sliding member 131 and is configured to be able to telescope following the sliding of the sliding member 131.

The telescopic member 180 is a component that can be telescopically deformed in a direction parallel to the set direction. The telescopic member 180 can be an elastic member (such as a spring, an elastic cable), a telescopic sleeve, etc. One end of the telescopic member 180 is connected with the mounting base 110, and the other end is connected with the sliding member 131. In this case, the sliding member 131 can be supported on the mounting base 110 via the telescopic member 180. When the sliding member 131 slides, the telescopic member 180 telescopes to allow the sliding of the sliding member 131.

In this case, the sliding member 131 can be supported by connecting the sliding member 131 and the mounting base 110 through the telescopic member 180.

In some embodiments, referring to Fig. 3, the cleaning apparatus 100 further comprises a bearing member 190. The bearing member 190 is connected between the telescopic member 180 and the sliding member 131 and is configured to allow the telescopic member 180 to rotate relative to the sliding member 131 following the mounting base 110.

The bearing member 190 is a component that supports the relative movement between the sliding component 131 and the telescopic component 180 around the set direction. The bearing member 190 can be a ball bearing (such as a deep groove ball bearing, a cylindrical roller bearing, a tapered roller bearing), a sliding bearing, etc., which is not specifically limited.

When the mounting base 110 rotates, the telescopic member 180 rotates along with the mounting base 110. Under the action of the bearing member 190, the sliding member 131 can only slide without rotation. In this way, the arrangement of the sliding member 131 is simpler.

Of course, in other embodiments, the telescopic member 180 may be directly connected with the sliding member 131, and the sliding member 131 rotates synchronously with the mounting base 110. In other embodiments, the sliding member 131 may also be arranged on the mounting base 110 in other structural forms, not limited to the form of the telescopic member 180. For example, a rack is provided in the mounting cavity K, and the sliding member 131 is mounted in the mounting cavity K via the bearing member 190 having external teeth that engage with the rack.

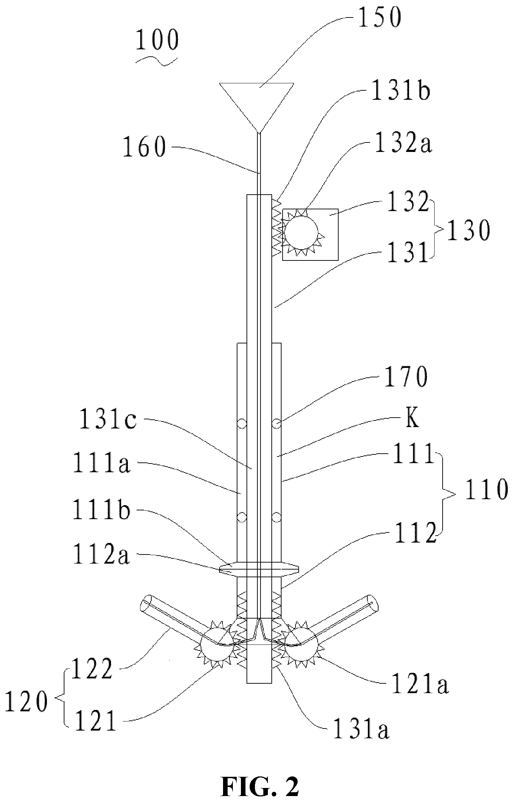

In some embodiments, referring to Fig. 2, the mounting base 110 comprises a first base body 111 and a second base body 112, and the first base body 111 and the second base body 112 are detachably connected in the set direction. The first base body 111 is configured to be detachably and drivably connected with the apparatus to be cleaned, the driving mechanism 130 is arranged on the first base body 111 or the second base body 112, and the nozzle 120 is arranged on the second base body 112.

The first base body 111 and the second base body 112 can be detachably connected by means of snap fit, thread connection, etc., which is not specifically limited. In actual applications, when mounting the cleaning apparatus 100, the first base body 111 is first fitted to a mounting assembly 212 (for driving the first base body 111 to rotate in a direction parallel to the set direction) on the apparatus to be cleaned 100, and then the second base body 112 is mounted on the first base body 111. Since the nozzle 120 on the second base body 112 is in the cleaning space of the apparatus to be cleaned 100 (such as the mixing space 211 of the stirring tank 210), the mounting space of the second base body 112 is large, especially in a plane perpendicular to the set direction. When the projection of the nozzle 120 exceeds the projection range of the mounting base 110, this method of mounting and dismounting the first base body 111 and the second base body 112 makes it more convenient to mount and dismount the mounting base 110 on the apparatus to be cleaned 100.

In some embodiments, referring to Fig. 2, the first base body 111 includes a main body 111a portion and a first lug boss 111b, the first lug boss 111b is arranged on a side of the main body 111a portion facing toward the second base body 112, the second base body 112 has a second lug boss 112a on the side facing toward the first base body 111, and the first lug boss 111b and the second lug boss 112a are detachably connected in the set direction. The projection of the first lug boss 111b along the set direction exceeds the projection range of the main body 111a portion along the set direction.

The first lug boss 111b and the second lug boss 112a can be detachably connected by means of snap fit, thread connection, etc., which is not specifically limited. The projection of the first lug boss 111b along the set direction exceeds the projection range of the main body 111a along the set direction. When the first base body 111 is mounted, the main body 111a portion is mounted on the apparatus to be cleaned 100 along the set direction. When the main body 111a portion is mounted in place, the main body 111a portion cannot move forward due to the obstruction of the first lug boss 111b. In this way, it is easy to know whether the first base body 111 is mounted in place.

It can be understood that when the mounting base 110 has a mounting cavity K, the mounting cavity K may run through the first base body 111 and the second base body 112 at the same time.

In an embodiment, referring to Fig. 3, the cleaning apparatus 100 comprises a mounting base 110, a nozzle 120 and a driving mechanism 130, the mounting base 110 comprises a first base body 111 and a second base body 112, the first base body 111 and the second base body 112 are detachably connected along the set direction of the mounting base 110, and the first base body 111 is configured to be detachably and drivably connected with an apparatus to be cleaned. The nozzle 120 is mounted on the second base body 112, the driving mechanism 130 comprises a sliding member 131 and a power source 132, the mounting base 110 has a mounting cavity K running through the first base body 111 and the second base body 112, the sliding member 131 passes through the mounting cavity K, and can slide relative to the mounting base 110 as driven by the power source 132. The sliding member 131 is drivably connected with the nozzle 120, and the nozzle 120 is swingably mounted on the second base body 112 around its own swing axis. The sliding member 131 is drivably connected with the nozzle 120, and drives the nozzle 120 to swing during sliding.

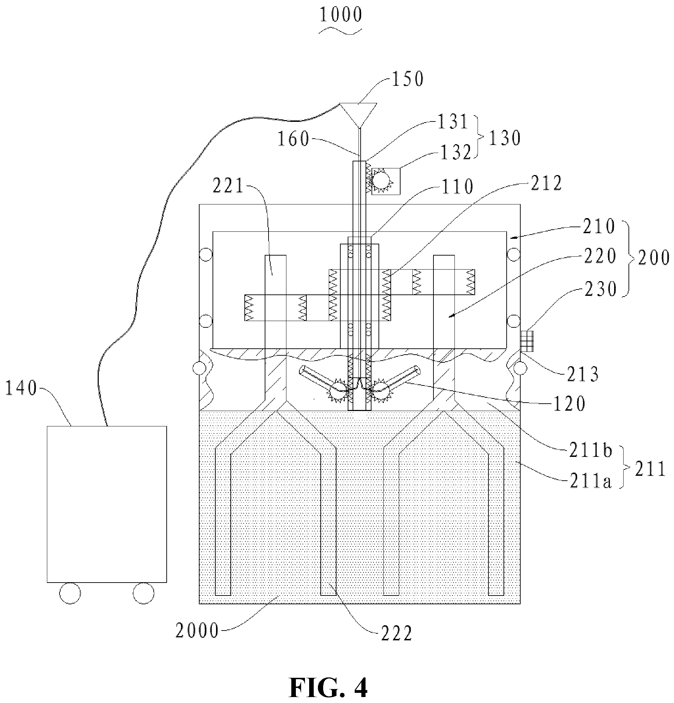

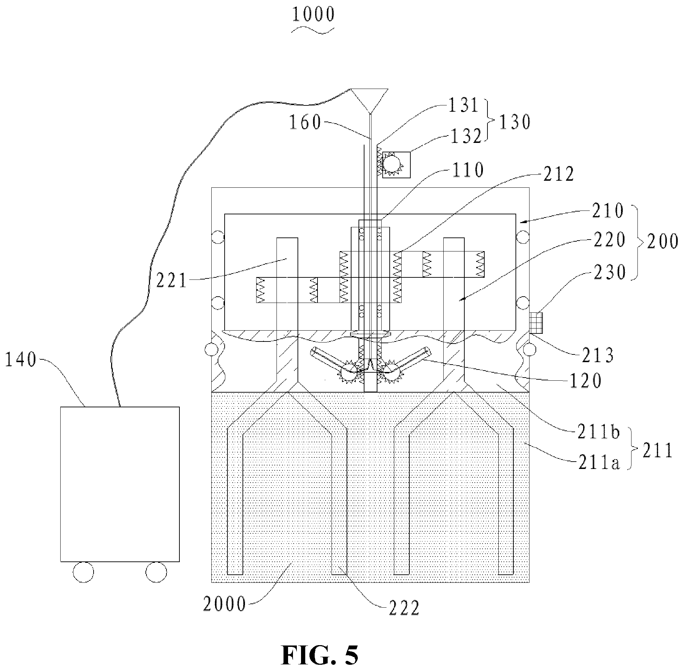

Figs. 4 and 5 are schematic structural diagrams of stirring devices 1000 provided in some embodiments of the present application.

In a second aspect, referring to Figs. 4 and 5, some embodiments of the present application provide a stirring device 1000, comprising a stirring apparatus 200 and the above-mentioned cleaning apparatus 100, the stirring apparatus 200 comprises a stirring tank 210 and a stirring member 220, the stirring tank 210 encloses a mixing space 211, the stirring member 220 comprises a mounting portion 221 connected with a stirring portion 222, the mounting portion 221 is mounted on the stirring tank 210, and the stirring portion 222 is located in the mixing space 211. The mounting base 110 of the cleaning apparatus 100 is fitted to the stirring tank 210, and the nozzle 120 is located in the mixing space 211.

The stirring tank 210 is a stirring container having a mixing space 211 for accommodating powder and solvent, and its specific form is not limited. The mounting portion 221 of the stirring member 220 may be a mounting shaft, and the stirring portion 222 may be a stirring paddle, which is not specifically limited, and reference may be made to the structure of a commonly used stirring member 220. It can be understood that the mounting portion 221 of the stirring member 220 is rotatably mounted on the stirring tank 210. As for the specific method of realizing the rotation of the mounting portion 221, it is not specifically limited in the embodiments of the present application, and those skilled in the art can perform conventional settings.

In actual operation, when the mounting portion 221 is fitted to the mounting assembly 212, the mounting portion 221 rotates and drives the nozzle 120 to rotate. At the same time, the nozzle 120 moves relative to the mounting base 110 under the action of its driving mechanism 130 to clean the stirring tank 210. At the same time, the stirring apparatus 200 is started to make the stirring member 220 rotate. When the stirring member 220 rotates, the solvent in the stirring tank 210 can be stirred, and the solvent can clean the inner wall of the stirring tank 210. In this way, the stirring tank 210 can be double-cleaned by the stirring member 220 and the cleaning apparatus 110, and the cleaning effect and cleaning efficiency for the stirring tank 210 are good.

In some embodiments, a mounting assembly 212 is provided in the stirring tank 210, the mounting assembly 212 is located outside the mixing space 211, the mounting portion 221 is mounted on the mounting assembly 212, and the mounting base 110 is detachably fitted to the mounting assembly 212. The mounting assembly 212 is configured to drive the mounting base 110 and the stirring member 220 to rotate.

When the stirring member 220 rotates as driven by the mounting assembly 212, it can stir the powder and solvent in the mixing space 211 to realize the function of the stirring device 1000. The mounting assembly 212 is a component for mounting the mounting base 110 and the stirring member 220, the specific structure thereof is not limited here and can be designed by those skilled in the art based on conventional settings.

In this case, the mounting assembly 212 has the function of providing rotation power to the mounting portion 221 and the mounting base 110. Regarding the specific structure of the mounting assembly 212, reference may also be made to the solutions in the following embodiments. It can be understood that those skilled in the art may design the mounting assembly 212 according to conventional settings.

In this way, when the stirring device 1000 needs to be cleaned, the mounting base 110 and the stirring member 220 can be driven to rotate through the mounting assembly 212, so that the stirring member 220 and the nozzle 120 can clean the stirring tank 210.

In some embodiments, the mounting assembly 212 is configured to drive the mounting base 110 and the stirring member 220 to rotate.

Regarding the specific structure of the mounting assembly 212, it can be but not limited to that the mounting assembly 212 comprises a plurality of drive shafts and rotating motors, the drive shafts are arranged in parallel and drivably connected with the rotating motors, the mounting portion 221 and the mounting base 110 are respectively fitted to a drive shaft, and the rotating motor can synchronously drive all the drive shafts to rotate.

In this case, the stirring member 220 and the mounting base 110 rotate synchronously as driven by the mounting assembly 212, and the stirring member 220 and the nozzle 120 can clean the stirring tank 210 synchronously, so that the cleaning efficiency is greatly improved.

Of course, in other embodiments, the mounting base 110 and the stirring member 220 may also rotate asynchronously, so that the nozzle 120 and the stirring member 220 clean the stirring tank 210 asynchronously.

In some embodiments, the mixing space 211 includes a first space 211a and a second space 211b that are adjacently arranged in the set direction, the stirring portion 222 is at least partially located in the first space 211a, and the nozzle 120 is located in the second space 211b. The first space 211a is located below the second space 211b in the gravity direction.

During actual operation, a solvent (for dissolving dirt in the stirring tank 210 ) is injected into the first space 211a, and the stirring portion 222 stirs the solvent and cleans the inner wall of the stirring tank 210 defining the first space 211a when stirring. Since only a small part of or no part of the stirring portion 222 is arranged in the second space 211b, or the solvent is not injected into the second space 211b, the solvent cannot effectively clean the second space 211b, resulting in a cleaning dead corner. In this case, the inner wall of the stirring tank 210 defining the second space 211b is cleaned by using the nozzle 120 located in the second space 211b, so that the stirring tank 210 can be cleaned thoroughly, and the cleaning effect for the stirring tank 210 is good.

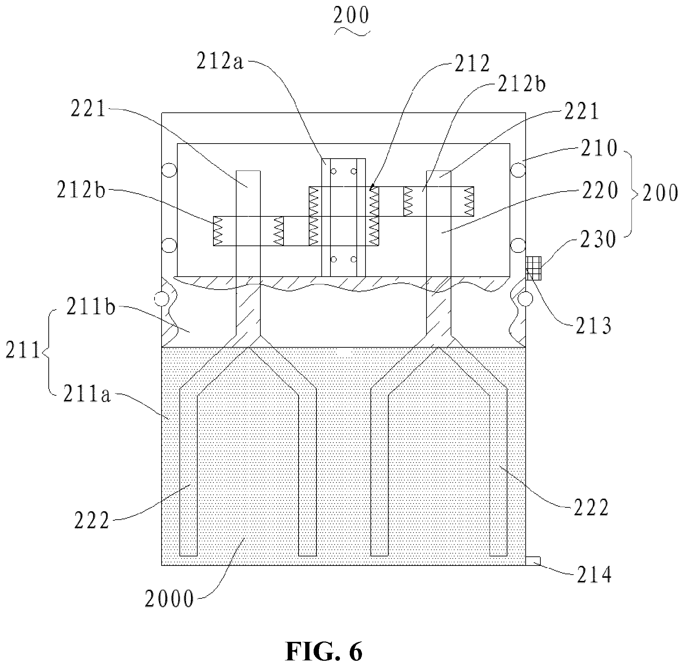

Fig. 6 is a schematic structural diagram of a stirring apparatus 200 in some embodiments of the present application.

In some embodiments, referring to Fig. 6, the mounting assembly 212 includes a main drive shaft 212a, the main drive shaft 212a has a mounting hole, the mounting hole is detachably fitted to the mounting base 110, and the main drive shaft 212a is configured to be able to drive the mounting base 110 to rotate.

It can be understood that the center line of the mounting hole is coaxial with the set direction of the mounting base 110. When the mounting base 110 comprises a first base body 111 and a second base body 112, the first base body 111 is fitted into the mounting hole, and the second base body 112 is located in the second space 211b. The first base body 111 and the mounting hole can be snap-fitted or fixedly connected by other structures such as a latch, as long as the positions of the mounting hole and the first base body 111 are kept fixed. When the main drive shaft 212a rotates, the mounting base 110 is driven to rotate.

In this case, the mounting hole on the main drive shaft 212a is fitted to the mounting base 110, and the mounting base 110 is conveniently and reliably connected.

Specifically, further referring to Fig. 6, the mounting assembly 212 further comprises a drive tooth 212b, the drive tooth 212b is drivably connected with the main drive shaft 212a (directly engaged or synchronous belt driven), and the mounting shaft of the stirring member 220 is coaxially mounted on the drive tooth 212b. When the main drive shaft 212a rotates, the drive tooth 212b rotates, thereby driving the stirring member 220 to rotate. In this way, the mounting assembly 212 can synchronously drive the stirring member 220 and the mounting base 110 to rotate.

It can be understood that the mounting assembly 212 is connected with a driving source, and the driving source provides power for the main drive shaft 212a to rotate. The driving source may be, but is not limited to, a motor.

In some embodiments, the stirring device 200 further comprises a sealing cover (not shown). When the mounting base 110 is detached from the mounting hole, the sealing cover covers the mounting hole. In this way, the mixing space 211 can be prevented from communicating with the outside through the mounting hole, and impurities can be prevented from entering the mixing space 211 through the mounting hole to contaminate the slurry.

In some embodiments, referring to Figs. 4 to 6, the stirring apparatus 200 further comprises a gas-permeable member 230, and the stirring tank 210 has an exhaust port 213 communicating with the second space 211b. The gas-permeable member 230 is hermetically fitted to the exhaust port 213 and is configured to only allow gas to flow.

The gas-permeable member 230 hermetically covers the exhaust port 213, and can allow gas to flow through it. The gas-permeable member 230 may be, but is not limited to, a gas-permeable cover having an gas-permeable membrane 230.

In this case, the gas existing in the stirring tank 210 can also be discharged from the gas-permeable member 230, which can avoid excessive pressure in the stirring tank 220 and facilitate the spraying of the cleaning agent.

In some embodiments, referring to Fig. 1, the cleaning apparatus 100 further comprises a cleaning agent supply source 140, the cleaning agent supply source 140 communicates with the nozzle 120 and is used to supply a cleaning agent to the nozzle 120, and the cleaning agent includes a dry ice cleaning agent.

The cleaning agent supply source 140 may be a cleaning agent tank, a cleaning agent box, or other members capable of containing the cleaning agent. The cleaning agent supply source 140 can provide a dry ice cleaning agent. The dry ice cleaning agent contains dry ice particles. When the dry ice particles are sprayed along the spraying direction of the nozzle 120 and impact a surface to be cleaned, they vaporize at the moment of impact and quickly exchange heat with the dirt on the surface to be cleaned and vaporize, causing the dirt to cool and solidify. The solidified dirt can quickly detach from the surface to be cleaned, thereby achieving dirt cleaning.

In this case, by using dry ice as a cleaning agent, the cleaning effect of the cleaning apparatus 100 is better. At the same time, the vaporized dry ice can be discharged from the gas-permeable member 230, which has little effect on the pressure inside the stirring tank 210.

In some embodiments, referring to Figs. 4 to 6, the stirring tank 210 has a sewage outlet 214 communicating with the first space 211a. The sewage outlet 214 may be located at the bottom of the bottom wall or the side wall of the stirring tank 210 to facilitate the discharge of the dirty solvent inside.

In some embodiments, referring to Figs. 4 to 6, the stirring apparatus 200 comprises at least two stirring members 220, and all the stirring members 220 are arranged around the set direction of the mounting base 110.

When there are a plurality of stirring members 220, the degree of stirring for the solvent is greater, the impact force of the solvent on the inner wall of the stirring tank 210 is greater, and the cleaning effect of the solvent is better. Moreover, in this case, all the stirring members 220 are mounted around the set direction, and the nozzle 120 is surrounded by all the mounting portions 221, and the movement of the nozzle 120 and that of the stirring member 220 will not interfere with each other.

The technical features of the above-mentioned embodiments can be combined arbitrarily. In order to make the description concise, not all possible combinations of the technical features in the above embodiments are described. However, all the combinations of the technical features should be considered as falling within the scope described in the specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A cleaning apparatus, comprising:
a mounting base, configured to be rotatable around a set direction;
nozzles, arranged on the mounting base; and
a driving mechanism, arranged on the mounting base and drivably connected with the nozzles, and used for driving the nozzles to move relative to the mounting base so that the nozzles have a spraying range in the set direction.

2. The cleaning apparatus according to claim 1, wherein the nozzle comprises a spray portion and a drive portion, and the drive portion connects the spray portion and the driving mechanism;
the drive portion is configured to be able to drive the spray portion to swing as driven by the driving mechanism.

3. The cleaning apparatus according to claim 2, wherein the drive portion comprises a first gear portion, and the first gear portion drivably connects the spray portion and the driving mechanism;
the driving mechanism is used for driving the first gear portion to rotate, and the first gear portion drives the spray portion to swing when rotating.

4. The cleaning apparatus according to any one of claims 1 to 3, wherein the driving mechanism comprises:
a sliding member, arranged on the mounting base and capable of sliding in a direction parallel to the set direction, the sliding member being drivably connected with the nozzle and driving the nozzle to move relative to the mounting base during sliding; and
a power source, used for driving the sliding member to slide.

5. The cleaning apparatus according to claim 4, wherein the sliding member has a first rack portion, the nozzle comprises a spray portion and a first gear portion, and the first gear portion drivably connects the spray portion and the first rack portion;
during the sliding of the sliding member, the first rack portion is capable of engaging with the first gear portion and driving the spray portion to swing.

6. The cleaning apparatus according to any one of claim 4, wherein the sliding member further has a second rack portion, the power source has a second gear portion, and the second gear portion engages with the second rack portion.

7. The cleaning apparatus according to any one of claims 4 to 6, wherein the cleaning apparatus comprises a plurality of nozzles, the plurality of nozzles are arranged around the set direction and are all drivably connected with the sliding member, and the sliding member is configured to drive the plurality of nozzles to move relative to the mounting base when sliding.

8. The cleaning apparatus according to any one of claims 4 to 7, wherein the mounting base is configured with a mounting cavity, and the sliding member passes through the mounting cavity.

9. The cleaning apparatus according to claim 8, wherein the sliding member has a pipe-passthrough channel therein, and the cleaning apparatus further comprises a conduit;
the conduit passes through the pipe-passthrough channel and extends to the interior of the nozzle, and is configured to communicate a cleaning agent supply source with the nozzle.

10. The cleaning apparatus according to any one of claims 8 to 9, wherein the cleaning apparatus further comprises a sealing member, the sealing member is arranged in the mounting cavity and hermetically connects the sliding member and the mounting base.

11. The cleaning apparatus according to any one of claims 4 to 10, wherein the cleaning apparatus further comprises a telescopic member and a bearing member, the telescopic member connects the mounting base and the sliding member and is configured to be able to telescope following the sliding of the sliding member;
the bearing member is connected between the telescopic member and the sliding member, and is configured to allow the telescopic member to rotate relative to the sliding member following the mounting base.

12. The cleaning apparatus according to any one of claims 1 to 11, wherein the mounting base comprises a first base body and a second base body, and the first base body and the second base body are detachably connected in the set direction;
the first base body is configured to be detachably and drivably connected with an apparatus to be cleaned, and the nozzle is arranged on the second base body.

13. The cleaning apparatus according to claim 12, wherein the first base body comprises a main body portion and a first lug boss, the first lug boss is arranged on a side of the main body portion facing toward the second base, a side of the second base body facing toward the first base body has a second lug boss, and the first lug boss and the second lug boss are detachably connected in the set direction;
the projection of the first lug boss along the set direction exceeds the projection range of the main body portion along the set direction.

14. The cleaning apparatus according to claim 1, wherein the cleaning apparatus further comprises:
a conduit, the first end of the conduit communicating with a cleaning agent supply source, and the second end of the conduit extending into the interior of the nozzle.

15. A stirring device, comprising:
a stirring apparatus, comprising:
a stirring tank, provided with a mixing space;
a stirring member, comprising a mounting portion connected with a stirring portion, the mounting portion being mounted on the stirring tank, and the stirring portion being located in the mixing space; and
the cleaning apparatus according to any one of claims 1 to 14, the mounting base being fitted to the stirring tank, and the nozzle being located in the mixing space.

16. The stirring device according to claim 15, wherein a mounting assembly is provided in the stirring tank, the mounting assembly is located outside the mixing space, the mounting portion is mounted on the mounting assembly, and the mounting base is detachably fitted to the mounting assembly;
the mounting assembly is configured to drive the mounting base and the stirring member to rotate.

17. The stirring device according to claim 16, wherein the mounting assembly is configured to drive the mounting base and the stirring member to rotate synchronously.

18. The stirring device according to any one of claims 15 to 18, wherein the mixing space comprises a first space and a second space arranged adjacent to each other in the set direction, the stirring portion is at least partially located in the first space, and the nozzle is located in the second space;
the first space is located below the second space in the gravity direction.

19. The stirring device according to claim 18, wherein the stirring apparatus further comprises:
a gas-permeable member, wherein the stirring tank has an exhaust port communicating with the second space, and the gas-permeable member is hermetically fitted to the exhaust port and is configured to only allow gas to flow.

20. The cleaning apparatus according to claim 19, wherein the cleaning apparatus further comprises:
the cleaning agent supply source, communicating with the nozzle and used to supply a cleaning agent to the nozzle, the cleaning agent including a dry ice cleaning agent.
